# EUROPÄISCHE PATENTSCHRIFT

(11) **EP 3 217 498 B1**
(45) Veröffentlichungstag und Bekanntmachung des Hinweises auf die Patenterteilung: **24.08.2022**
(21) Anmeldenummer: 17305220.0
(22) Anmeldetag: 01.03.2017
(51) Int. Cl.: H02G 3/18

(54) **ELEKTRISCHES INSTALLATIONSGERÄT**
ELECTRICAL INSTALLATION DEVICE
DISPOSITIF D'INSTALLATION ELECTRIQUE

(30) Priorität: 11.03.2016 DE 102016104460
(43) Veröffentlichungstag der Anmeldung: 13.09.2017
(73) Patentinhaber: Schneider Electric Industries SAS, 92500 Rueil-Malmaison (FR)
(72) Erfinder: Rao, Arjun, 51643 Gummersbach (DE)
(74) Vertreter: Manitz Finsterwald Patent- und Rechtsanwaltspartnerschaft mbB

(56) Entgegenhaltungen:
- EP-A2- 0 722 208
- WO-A1-2014/096674
- WO-A1-2014/096679
- DE-A1- 2 050 842
- DE-B3-102014 110 652
- US-A1- 2015 311 687
- US-B1- 6 533 225

## Beschreibung

Die vorliegende Erfindung betrifft ein elektrisches Installationsgerät nach dem Oberbegriff des Anspruchs 1 (US 2015/311687 A1). Ein solches elektrisches Installationsgerät kann beispielsweise eine Steckdose, ein Lichtschalter oder eine Kombination von beidem sein.

Ein ähnliches Installationsgerät ist aus der WO 2014/096674 A1 bekannt. Die EP 0 722 208 A2 offenbart eine Einbauhalterung für ein Elektroinstallationsgerät. Aus der US 6 533 225 B1 ist ein Unterputzgehäuse für einen Audioregler bekannt.

Bei der Montage muss der mit Anschlussklemmen versehene Einsatz an die zugehörigen elektrischen Adern angeschlossen werden, wobei es bei Reparatur oder Wartungsarbeiten auch erforderlich sein kann, den Einsatz auszutauschen oder aber durch einen anderen Einsatz zu ersetzen.

Es ist die Aufgabe der vorliegenden Erfindung, ein elektrisches Installationsgerät der eingangs genannten Art derart weiterzubilden, dass Reparatur- und Wartungsarbeiten weniger Zeit in Anspruch nehmen.

Die Lösung dieser Aufgabe erfolgt durch die Merkmale des Anspruchs 1.

Erfindungsgemäß kann der Einsatz einerseits auf einfache Weise in der Aufnahme montiert werden, indem dieser in die Aufnahme eingeklipst wird, so dass die Schnappverbindung den Einsatz in der Aufnahme hält. Wenn allerdings für Messzwecke, Reparaturarbeiten oder Wartungsarbeiten der Einsatz von den an den Anschlussklemmen angeschlossenen Adern wieder getrennt werden muss, so lässt sich der Einsatz auf einfachste Weise in kürzester Zeit aus der Aufnahme mit nur zwei Fingern einer Hand lösen, ohne dass hierfür ein Werkzeug oder gar ein Spezialwerkzeug erforderlich wäre.

Hierbei ist es zudem nicht erforderlich, die Aufnahme von ihrer Befestigungsfläche zu lösen. Vielmehr kann die als Aufputzgehäuse oder als Sichtrahmen für eine Unterputzmontage ausgebildete Aufnahme nach einer erstmaligen Montage in ihrer Montageposition verbleiben. Wenn der Einsatz repariert, ausgetauscht und oder durch einen anderen Einsatz ersetzt werden muss, so lässt sich der Einsatz mit einem einzigen Griff mit nur zwei Fingern aus der Aufnahme lösen, so dass anschließend ohne räumliche Beschränkung die Adern aus den Anschlussklemmen gelöst werden können.

Vorteilhafte Ausführungsformen der Erfindung sind in der Beschreibung, der Zeichnung sowie den Unteransprüchen beschrieben.

Nach der Erfindung umfasst die Schnappverbindung zwei Schnapphebel, die an dem Einsatz angeformt sind. Durch die Verwendung von zwei Schnapphebeln kann der Einsatz aus der Aufnahme besonders einfach mit nur zwei Fingern gelöst werden.

Nach einer weiteren vorteilhaften Ausführungsform können zwischen der Aufnahme und dem Einsatz zwei Eingriffsräume vorgesehen sein, die derart dimensioniert sind, dass in diese mit zwei Fingerspitzen so weit eingegriffen werden kann, dass die Schnappverbindung mit zwei Fingern lösbar ist. Durch eine entsprechende Dimensionierung der Eingriffsräume ist sichergestellt, dass ein (erwachsener) Monteur mit zwei Fingerspitzen, beispielsweise den Spitzen des Daumens und des Zeigefingers, in die Eingriffsräume eingreifen kann und zwar so weit, dass ein Lösen der Schnappverbindung bzw. ein Betätigen der Schnapphebel möglich ist.

Zu beiden Seiten jedes Schnapphebels ist jeweils ein Verriegelungssteg angeformt, der hinter einem Verriegelungsvorsprung der Aufnahme einschnappt. Hierdurch sind insgesamt vier Verriegelungspunkte zwischen Einsatz und Aufnahme vorgesehen, so dass der Einsatz sicher in der Aufnahme gehalten und positioniert ist.

Nach einer weiteren vorteilhaften Ausführungsform sind Aufnahme und Einsatz so ausgebildet, dass die Schnapphebel von zwei Fingerspitzen hintergreifbar sind. Auf diese Weise können die beiden Schnapphebel mit nur geringer Kraft und angenehmer Haptik ausgelenkt werden, so dass sich die Schnappverbindung löst.

Nach einer weiteren vorteilhaften Ausführungsform kann jeder Schnapphebel zwei voneinander beabstandete Schenkel besitzen, die an dem Einsatz angeformt sind und die über einen Quersteg miteinander verbunden sind. Bei dieser Ausführungsform lässt sich der Quersteg vorteilhaft als Grifffläche verwenden und durch Beabstandung der Schenkel und Verbindung derselben über den Quersteg ist ein Schnapphebel geschaffen, der einen nur geringen Materialverbrauch aufweist, und der gleichzeitig mit nur geringen Kräften betätigbar ist.

Nach einer weiteren vorteilhaften Ausführungsform kann die Schnappverbindung zwei Griffmulden umfassen, die insbesondere mit einer Riffelung versehen sind. Durch solche Griffmulden lässt sich eine besonders angenehme Haptik erzielen, wobei gleichzeitig durch die im Bereich der Griffmulden vergrößerte Angriffsfläche geringere Lösekräfte erforderlich sind.

Nach einer weiteren Ausführungsform kann jeder Eingriffsraum in einer Richtung quer zu einem in den Eingriffsraum eingesetzten Finger, d.h. quer zur Längserstreckung eines Fingers, eine Breite von mindestens 13 mm, insbesondere von mindestens 15 mm, und insbesondere von mindestens 17 mm besitzen. Durch Vorsehen einer solchen Mindestbreite ist sichergestellt, dass der Installateur mit seinen Fingerspitzen ausreichend tief in den Eingriffsraum eingreifen kann, um eine sichere und angenehme Betätigung der Schnappverbindung zu gewährleisten.

Nach einer weiteren vorteilhaften Ausführungsform können in der Aufnahme zwei Schraubaufnahmen vorgesehen sein, die jeweils neben einem Eingriffsraum angeordnet sind. Durch seitliches Versetzen der Schraubaufnahmen neben den jeweiligen Eingriffsraum ist dafür gesorgt, dass dieser vollständig frei ist, so dass ein Eingreifen in den Eingriffsraum nicht behindert wird.

Der Einsatz des Installationsgerätes kann beispielsweise ein Steckdoseneinsatz oder ein Schalteinsatz sein. Auch kann das Installationsgerät eine Kombination derartiger Einsätze aufweisen, beispielsweise einen Steckdoseneinsatz und einen Schalteinsatz.

Wenn die Aufnahme als Aufputzgehäuse ausgebildet ist, muss dieses lediglich an einer Oberfläche montiert werden und der Einsatz muss in das Aufputzgehäuse eingeklipst werden. Nach optionaler Montage einer Sichtabdeckung ist bereits die vollständige Montage erfolgt. Wenn die Aufnahme als Sichtrahmen für eine Unterputzmontage ausgebildet ist, muss ebenfalls der Sichtrahmen lediglich an der Montagefläche montiert werden und der Einsatz muss in das Unterputzgehäuse eingeklipst werden, um die Montage - gegebenenfalls nach Befestigung einer Sichtabdeckung - zu vollenden.

Nach einer weiteren vorteilhaften Ausführungsform können die zwei Schnapphebel zum Lösen der Schnappverbindung aufeinander zu bewegbar sein, was mit zwei Fingern einer Hand wesentlich einfacher und angenehmer zu bewerkstelligen ist als das Auseinanderdrücken zweier Hebel. Gleichzeitig ist der Einsatz in diesem Fall nach dem Lösen der Schnappverbindung durch die beiden Finger gehalten. Wenn zwei Schnapphebel zum Lösen der Schnappverbindung auseinander gedrückt werden müssten, so würde nach dem Lösen der Schnappverbindung der Einsatz aus der Aufnahme unter Umständen herausfallen, da dieser durch die Finger nicht mehr sicher gehalten ist.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine Aufnahme eines elektrischen Installationsgerätes in Form eines Aufputzgehäuses;

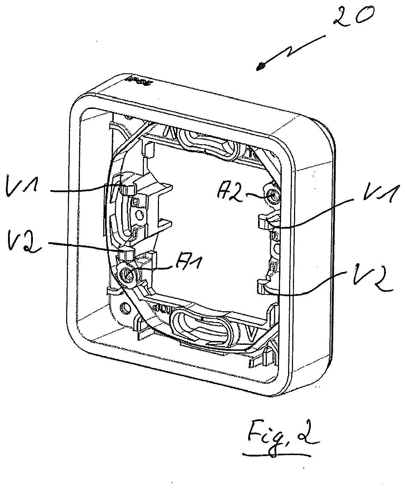

- Fig. 2: eine Aufnahme eines elektrischen Installationsgerätes in Form eines Sichtrahmens für eine Unterputzmontage;
- Fig. 3: einen Einsatz für ein elektrisches Installationsgerät; und
- Fig. 4: eine Explosionsdarstellung eines elektrischen Installationsgerätes, wobei der Steckdoseneinsatz von Fig. 3 in das Aufputzgehäuse von Fig. 1 eingesetzt ist.

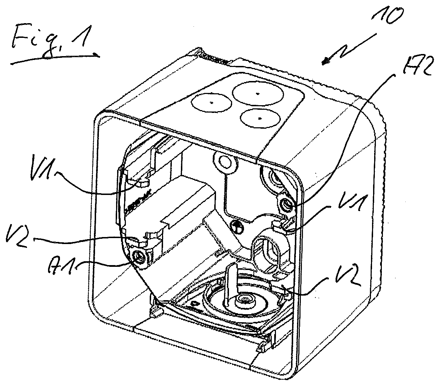

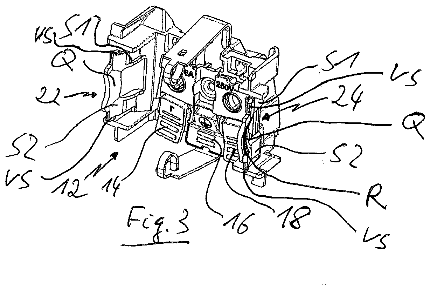

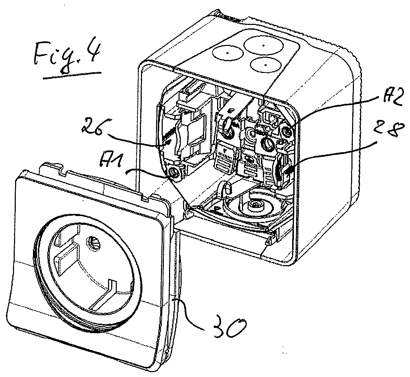

Das in Fig. 4 dargestellte elektrische Installationsgerät, das bei dem dargestellten Ausführungsbeispiel eine Aufputzsteckdose ist, umfasst als Aufnahme ein in Fig. 1 dargestelltes Aufputzgehäuse 10 und als Einsatz einen in Fig. 3 dargestellten Steckdoseneinsatz 12, der Anschlussklemmen 14, 16, 18 aufweist, wobei der Einsatz 12 in die Aufnahme 10 einsetzbar ist und in dieser über eine Schnappverbindung gehalten ist, in die der Einsatz 12 eingeklipst werden kann.

Der Einsatz 12 kann in gleicher Weise in eine als Sichtrahmen 20 ausgebildete Aufnahme zur Unterputzmontage eingeklipst werden.

Die Schnappverbindung zur lösbaren Halterung des Einsatzes 12 in den Aufnahmen 10, 20 umfasst bei dem dargestellten Ausführungsbeispiel genau zwei gegenüberliegend angeordnete Schnapphebel 22 und 24, die an dem Einsatz 12 angeformt sind.

Jeder Schnapphebel 22, 24 besitzt zwei voneinander beabstandete Schenkel S1 und S2, die an dem Einsatz 12 angeformt sind und die über einen Quersteg Q miteinander verbunden sind, so dass die Schenkel S1 und S2 zusammen mit dem Quersteg Q eine annähernd quadratische Öffnung rahmenartig umgeben. Hierbei sind die Querstege Q muldenartig ausgebildet, so dass zwei Griffmulden gebildet sind. Die jeweilige Außenseite der Querstege Q ist dabei zusätzlich mit einer Riffelung R versehen, die sich jeweils von einem Schenkel S1 zum anderen Schenkel S2 erstreckt.

Wie Fig. 4 verdeutlicht, ist der Einsatz 12 in die Aufnahme 10 (oder auch in die Aufnahme 20) einsetzbar und bei Einsetzen des Einsatzes 12 in die zugehörige Aufnahme gleiten die beiden Schnapphebel 22 und 24 über mit Anschrägungen versehene Verriegelungsvorsprünge V1 und V2, die in der jeweiligen Aufnahme 10, 20 vorgesehen und bei den dargestellten Ausführungsbeispielen einstückig an diese angeformt sind. Korrespondierend zu jedem Verriegelungsvorsprung ist an jedem Schenkel S1 und S2 seitlich ein Verriegelungssteg VS angeformt. Bei Einsetzen des Einsatzes 12 in die zugehörige Aufnahme 10, 20 gleiten die Verriegelungsstege VS zunächst über die Anschrägungen der Verriegelungsvorsprünge V1 und V2: Wenn der Einsatz 12 vollständig in die Aufnahme 10, 20 eingesetzt ist, schnappen die Verriegelungsstege VS hinter den zugehörigen Verriegelungsvorsprüngen V1 und V2 zurück, wodurch die Schnapphebel 22 und 24 insgesamt zurückfedern, so dass der Einsatz sicher in der Aufnahme gehalten ist.

Um den Einsatz 12 aus seiner Aufnahme zu lösen, müssen die beiden Schnapphebel 22 und 24 so weit aufeinander zu bewegt werden, bis die Verriegelungsstege VS nicht mehr hinter der Verriegelungsvorsprünge V1 und V2 greifen, so dass der Einsatz aus der Aufnahme herausgenommen werden kann. Das Lösen der Schnappverbindung zwischen den Schnapphebeln 22 und 24 und den Verriegelungsvorsprüngen V1 und V2 ist erfindungsgemäß mit nur zwei Fingern einer Hand möglich. Hierzu sind bei in die Aufnahme aufgesetztem Einsatz 12 zwei Eingriffsräume vorgesehen, in die ein (erwachsener) Installateur mit zwei Fingerspitzen, insbesondere mit den Fingerspitzen des Daumens und des Zeigefingers, so weit eingreifen kann, dass die Schnappverbindung lösbar ist. Die beiden Eingriffsräume 26 und 28 befinden sich dabei zwischen einer Wandung der jeweiligen Aufnahme 10, 20 und den Schnapphebeln 22 und 24 des Einsatzes 12. Durch Eingreifen mit zwei Fingerspitzen in die Eingriffsräume 26 und 28 sind die Schnapphebel 22, 24 von den Fingerspitzen hintergreifbar und können aufeinander zu bewegt werden (zusammengedrückt werden), wobei die Fingerkuppen auf den Griffmulden aufliegen, die durch die Querstege Q gebildet sind.

Wie Fig. 4 weiterhin verdeutlicht, erstrecken sich die Eingriffsräume 26 und 28 in einer Richtung quer zu einem in den Eingriffsraum eingesetzten Finger (in den Figuren in vertikaler Richtung) zwischen den Verriegelungsvorsprüngen V1 und V2 und zwar über eine Breite (in Fig. 4 ist dies die Höhe) von mindestens 13 mm, insbesondere von mindestens 15 mm und insbesondere von mindestens 17 mm. Hierdurch ist gewährleistet, dass die Fingerspitzen so weit in die Eingriffsräume 26 und 28 eingreifen können, dass die Schnappverbindung mit geringen Kräften und angenehmer Haptik lösbar ist.

Bezogen auf den Einsatz 12 und auch auf die Aufnahme 10 oder 20 befinden sich die beiden Schnapphebel 22 und 24 in einer durch das Zentrum verlaufenden Horizontalebene bzw. in einer horizontalen Mittelebene des Installationsgeräts. Versetzt zu dieser Mittelebene ist in jeder Aufnahme 10, 20 neben jedem Eingriffsraum 26, 28 eine Schraubaufnahme A1 und A2 vorgesehen, in die eine Befestigungsschraube eingeschraubt werden kann. Hierdurch können die Eingriffsräume 26 und 28 frei von Befestigungsmitteln gehalten werden und eine in Fig. 4 dargestellte Sichtabdeckung 30 kann an der Aufnahme 10 oder 20 festgeschraubt werden.

Bei den beschriebenen Ausführungsbeispielen ist der Einsatz 12 zwar als Steckdoseneinsatz dargestellt und beschrieben. Es kann sich hierbei jedoch genauso um einen Schalteinsatz handeln, der mit Anschlussklemmen versehen ist.

Zur Montage des vorstehend beschriebenen elektrischen Installationsgeräts wird das Aufputzgehäuse 10 an einer Montagefläche verschraubt. Alternativ kann der Sichtrahmen 20 an einer Montagefläche oder aber an einer bereits vormontierten Unterputzdose verschraubt werden. Die anzuschließenden Adern werden dabei durch die Aufnahme nach vorne hindurchgeführt und können dann (mit ausreichender Länge) bequem an den Anschlussklemmen 14, 16, 18 angeschlossen werden. Hieraufhin ist es nur erforderlich, den Einsatz in die Aufnahme 10 oder 20 einzuklipsen, so dass dann lediglich noch eine optionale Sichtabdeckung 30 montiert werden muss.

Zum Lösen des Einsatzes 12 aus der Aufnahme 10 oder 20 kann mit zwei Fingerspitzen, beispielsweise von Daumen und Zeigefinger in die Eingriffsräume 26 und 28 eingegriffen werden, so dass die Fingerkuppen auf den Griffmulden der Querstege Q aufliegen. Durch Zusammendrücken der beiden Schnapphebel 22 und 24 kann dann auf einfache und kraftarme Weise die Schnappverbindung gelöst werden, so dass der Einsatz 12 aus der Aufnahme entnommen werden kann, wobei der Einsatz hierbei durch die beiden Finger einer Hand gleichzeitig gehalten ist.

## Patentansprüche

1. Elektrisches Installationsgerät mit einer Aufnahme für zumindest einen mit Anschlussklemmen (14-18) versehenen Steckdosen- oder Schalteinsatz (12), und mit einer Sichtabdeckung (30), die an der Aufnahme montiert ist, ist, wobei der Steckdosen- oder Schalteinsatz (12) in die Aufnahme über eine Schnappverbindung eingeklipst ist, die mit zwei Fingern lösbar ist, und der Steckdosen- oder Schalteinsatz (12) nach Demontage der Sichtabdeckung (30) mit zwei Fingern von der Aufnahme lösbar ist,
**dadurch gekennzeichnet, dass**
die Aufnahme ein Aufputzgehäuse (10) oder zumindest ein Sichtrahmen (20) für eine Unterputzmontage ist,
die Schnappverbindung zwei Schnapphebel (22, 24) umfasst, die an dem Steckdosen- oder Schalteinsatz (12) angeformt sind, und
zu beiden Seiten jedes Schnapphebels jeweils ein Verriegelungssteg (VS) angeformt ist, der hinter einen Verriegelungsvorsprung (V1, V2) der Aufnahme einschnappt.

2. Installationsgerät nach Anspruch 1,
**dadurch gekennzeichnet, dass**
zwischen der Aufnahme (10, 20) und dem Steckdosen- oder Schalteinsatz (12) zwei Eingriffsräume (26, 28) vorgesehen sind, die derart dimensioniert sind, dass in diese mit zwei Fingerspitzen so weit eingegriffen werden kann, dass die Schnappverbindung mit zwei Fingern lösbar ist.

3. Installationsgerät nach Anspruch 1 oder 2,
**dadurch gekennzeichnet, dass**
die Schnapphebel (22, 24) von zwei Fingerspitzen hintergreifbar sind.

4. Installationsgerät nach zumindest einem der vorstehenden Ansprüche 1 - 3,
**dadurch gekennzeichnet, dass**
jeder Schnapphebel (22, 24) zwei voneinander beabstandete Schenkel (S1, S2) besitzt, die an dem Steckdosen- oder Schalteinsatz angeformt sind und die über einen Quersteg (Q) miteinander verbunden sind.

5. Installationsgerät nach zumindest einem der vorstehenden Ansprüche,
**dadurch gekennzeichnet, dass**
die Schnappverbindung zwei Griffmulden umfasst, die insbesondere mit einer Riffelung (R) versehen sind.

6. Installationsgerät nach Anspruch 2,
**dadurch gekennzeichnet, dass**
jeder Eingriffsraum (26, 28) in einer Richtung quer zu einem in den Eingriffsraum eingesetzten Finger eine Breite von mindestens 13 mm, insbesondere von mindestens 15 mm, und insbesondere von mindestens 17 mm besitzt.

7. Installationsgerät nach Anspruch 2,
**dadurch gekennzeichnet, dass**
in der Aufnahme (10, 20) zwei Schraubaufnahmen (A1, A2) vorgesehen sind, die jeweils neben einem Eingriffsraum (26, 28) angeordnet sind.

8. Installationsgerät nach zumindest einem der vorstehenden Ansprüche 1 - 7,
**dadurch gekennzeichnet, dass**
die zwei Schnapphebel (22, 24) zum Lösen der Schnappverbindung aufeinander zu bewegbar sind.

## Claims

1. An electrical installation device having a receptacle for at least one socket insert or switch insert (12) provided with terminals (14-18), and having a window cover (30) which is installed at the receptacle, wherein the socket insert or switch insert (12) is clipped into the receptacle via a snap-in connection which can be released with two fingers, and
the socket insert or switch insert (12) can be released from the receptacle with two fingers after dismantling the window cover (30),
**characterized in that**
the receptacle is a surface-mounted housing (10) or at least one window frame (20) for a flush mounting,
the snap-in connection comprises two snap levers (22, 24) which are molded at the socket insert or switch insert (12), and
a respective locking web (VS) is molded at both sides of each snap lever and snaps in behind a locking projection (V1, V2) of the receptacle.

2. An installation device in accordance with claim 1,
**characterized in that**
two engagement spaces (26, 28) are provided between the receptacle (10, 20) and the socket insert or switch insert (12), said engagement spaces (26, 28) being dimensioned such that they can be engaged into so far with two fingertips that the snap-in connection can be released with two fingers.

3. An installation device in accordance with claim 1 or claim 2,
**characterized in that**
the snap levers (22, 24) can be engaged behind by two fingertips.

4. An installation device in accordance with at least one of the preceding claims 1 to 3,
**characterized in that**
each snap lever (22, 24) has two mutually spaced apart limbs (S1, S2) which are molded at the socket or switch insert and which are connected to one another via a transverse web (Q).

5. An installation device in accordance with at least one of the preceding claims,
**characterized in that**
the snap-in connection comprises two grip recesses which are in particular provided with a grooving (R).

6. An installation device in accordance with claim 2,
**characterized in that**
each engagement space (26, 28) has a width of at least 13 mm, in particular of at least 15 mm, and in particular of at least 17 mm, in a direction transverse to a finger inserted into the engagement space.

7. An installation device in accordance with claim 2,
**characterized in that**
two screw mounts (A1, A2) are provided in the receptacle (10, 20) and are each arranged next to an engagement space (26, 28).

8. An installation device in accordance with at least one of the preceding claims 1 to 7,
**characterized in that**
the two snap levers (22, 24) can be moved towards one another to release the snap-in connection.

## Revendications

1. Appareil d'installation électrique présentant un logement pour au moins un insert de prise ou de commutation (12) pourvu de bornes de connexion (14-18), et présentant un cache (30) qui est monté sur le logement, l'insert de prise ou de commutation (12) étant clipsé dans le logement par une liaison par encliquetage qui peut être détachée avec deux doigts, et l'insert de prise ou de commutation (12) pouvant être détaché du logement avec deux doigts après le démontage du cache (30),
**caractérisé en ce que**
le logement est un boîtier apparent (10) ou au moins un cadre visible (20) pour un montage encastré,
la liaison par encliquetage comprend deux leviers d'encliquetage (22, 24) qui sont conformés sur l'insert de prise ou de commutation (12), et
de part et d'autre de chaque levier d'encliquetage est conformée une barrette de verrouillage (VS) qui vient s'encliqueter derrière une saillie de verrouillage (V1, V2) du logement.

2. Appareil d'installation selon la revendication 1,
**caractérisé en ce que**
deux espaces d'engagement (26, 28) sont prévus entre le logement (10, 20) et l'élément de prise ou de commutation (12), qui sont dimensionnés de manière à permettre à deux doigts de s'y engager du bout de doigt aussi loin que la liaison par encliquetage peut être détachée avec deux doigts.

3. Appareil d'installation selon la revendication 1 ou 2,
**caractérisé en ce que**
les leviers d'encliquetage (22, 24) peuvent être saisis par l'arrière à l'aide du bout de deux doigts.

4. Appareil d'installation selon l'une au moins des revendications précédentes 1 à 3,
**caractérisé en ce que**
chaque levier d'encliquetage (22, 24) possède deux branches (S1, S2) espacées l'une de l'autre qui sont conformées sur l'insert de prise ou de commutation et qui sont reliées entre elles par une barrette transversale (Q).

5. Appareil d'installation selon l'une au moins des revendications précédentes,
**caractérisé en ce que**
la liaison par encliquetage comprend deux cavités de préhension qui sont en particulier pourvues d'une cannelure (R).

6. Appareil d'installation selon la revendication 2,
**caractérisé en ce que**
chaque espace d'engagement (26, 28) possède une largeur d'au moins 13 mm, en particulier d'au moins 15 mm, et en particulier d'au moins 17 mm, dans une direction transversale à un doigt inséré dans l'espace d'engagement.

7. Appareil d'installation selon la revendication 2,
**caractérisé en ce que**
deux logements à vis (A1, A2) sont prévus dans le logement (10, 20), qui sont disposés chacun à côté d'un espace d'engagement (26, 28).

8. Appareil d'installation selon l'une au moins des revendications précédentes 1 à 7,
**caractérisé en ce que**
les deux leviers d'encliquetage (22, 24) peuvent être déplacés l'un vers l'autre pour détacher la liaison par encliquetage.
